(19) Europäisches Patentamt
European Patent Office
Office européen des brevets

(11) **EP 1 860 782 A1**

(12) **EUROPEAN PATENT APPLICATION**

(43) Date of publication:
**28.11.2007 Bulletin 2007/48**

(51) Int Cl.:
***H04B 1/10*** *(2006.01)*

(21) Application number: **07108918.9**

(22) Date of filing: **25.05.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK YU**

(30) Priority: **27.05.2006 KR 20060047867**

(71) Applicant: **Samsung Electronics Co., Ltd.**
**Suwon-si**
**Gyeonggi-do (KR)**

(72) Inventors:
• **Lee, Jae-Yong**
**Gyeonggi-do (KR)**

• **Lee, Kang-Gyu**
**Gyeonggi-do (KR)**
• **Jeong, Joong-Ho**
**Gyeonggi-do (KR)**
• **Kim, Min-Goo**
**Gyeonggi-do (KR)**

(74) Representative: **Grünecker, Kinkeldey,**
**Stockmair & Schwanhäusser**
**Anwaltssozietät**
**Maximilianstrasse 58**
**80538 München (DE)**

(54) **Apparatus and method for detecting channel quality in a mobile communication system**

(57) An apparatus and method for detecting channel quality in a mobile communication system are provided. The method includes detecting a channel quality of a first channel quality detection period using a reference value of a reference signal; determining whether a reference value can be measured in a second channel quality detection period being one of a plurality of channel quality detection periods following the first channel quality detection period; and detecting a channel quality of the second channel quality detection period according to the determination.

FIG.2

EP 1 860 782 A1

**Description**

**BACKGROUND OF THE INVENTION**

1. Field of the Invention

The present invention generally relates to a mobile communication system, and in particular, to an apparatus and method for detecting channel quality in a mobile communication system.

2. Description of the Related Art

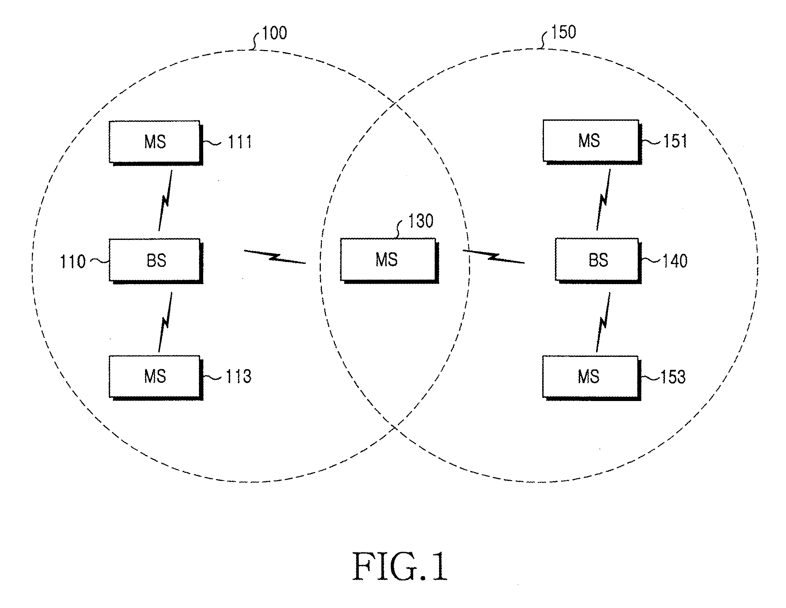

FIG. 1 is a schematic view of the configuration of a conventional mobile communication system.
In FIG. 1, the mobile communication system is built in a multi-cell structure. Thus, the mobile communication system includes cells 100 and 150, a Base Station (BS) 110 for managing the cell 100, a BS 140 for managing the cell 150, and a plurality of Mobile Stations (MSs) 111, 113, 130, 151 and 153.
Accurate channel quality detection at the MSs is critical to improving the performance of the mobile communication systems. For the MSs to perform a variety of operations including handover and link adaptation, channel quality detection is essential. Therefore, accurate channel quality detection leads to improved system performance.
An MS detects channel quality in the following manner. The channel quality can be the average Carrier-to-Interference and Noise Ratio (CINR) or Received Signal Strength Indication (RSSI) of a reference signal such as a preamble signal or a pilot signal. For the sake of clarity, it is assumed that the channel quality is the average CINR, and the CINR of a preamble signal or a pilot signal is just called the CINR for short.
The MS first computes the average CINR according to Equation (1) and Equation (2) below.

$$\mu_{CINR}[k] = CINR[0], \quad k = 0$$

$$\ldots \ldots (1)$$

$$\mu_{CINR}[k] = (1 - \alpha_{avg})\mu_{CINR}[k-1] + \alpha_{avg}CINR[k], \quad k > 0$$

$$\ldots \ldots (2)$$

where $\mu_{CINR}[k]$ denotes the average CINR of a $k^{th}$ frame, $CINR[k]$ denotes the actual CINR measurement of the $k^{th}$ frame, and $\alpha_{avg}$ is a weight being an averaging parameter defined by the BS. The CINR measurement is a CINR measured by the MS and an average CINR detection period is a frame period. k is a frame index, an initial frame index for average CINR detection is set to 0 (k=0), and k is increased by 1 for every following frame.
As noted from Equation (1) and Equation (2), the MS measures the CINR of every frame to detect the average CINR. However, it may occur that the MS cannot measure the CINR when it fails to receive the preamble signal or the pilot signal, or there exists a period for which the MS cannot measure the CINR of a signal from the serving BS to measure the signal quality of another BS using a different frequency from that of the serving BS. Consequently, it is impossible to detect the average CINR.
The resulting failure in accurate channel quality detection degrades the overall performance of the mobile communication system.

**SUMMARY OF THE INVENTION**

An aspect of the present invention is to substantially solve at least the above problems and/or disadvantages and to provide at least the advantages described below. Accordingly, one aspect of the present invention is to provide an apparatus and method for detecting channel quality in a communication system.
According to another aspect of the present invention, there is provided a channel quality detecting apparatus in a mobile communication system. The apparatus includes a channel quality detector for detecting a channel quality of a first channel quality detection period using a reference value of a reference signal, determining whether the reference value can be measured in a second channel quality detection period being one of a plurality of channel quality detection periods following the first channel quality detection period, and detecting a channel quality of the second channel quality detection period according to the determination.

According to another aspect of the present invention, there is provided a method for detecting channel quality in a channel quality detecting apparatus in a mobile communication system. The method includes detecting a channel quality of a first channel quality detection period using a reference value of a reference signal; determined whether a reference value can be measured in a second channel quality detection period being one of a plurality of channel quality detection periods following the first channel quality detection period; and detecting a channel quality of the second channel quality detection period according to the determination.

## BRIEF DESCRIPTION OF THE DRAWINGS

The above and other objects, features and advantages of certain exemplary embodiments of the present invention will be more apparent from the following detailed description taken in conjunction with the accompanying drawings, in which:

FIG. 1 is a schematic view of the configuration of a conventional mobile communication system;
FIG. 2 is a block diagram of a channel quality detection apparatus according to an exemplary embodiment of the present invention; and
FIG. 3 is a flow diagram illustrating an operation for detecting an average CINR in a channel quality detector illustrated in FIG 2.

## DETAILED DESCRIPTION OF EXEMPLARY EMBODIMENTS

The matters defined in the description such as a detailed construction and elements are provided to assist in a comprehensive understanding of exemplary embodiments of the invention. Accordingly, those of ordinary skill in the art will recognize that various changes and modifications of the embodiments described herein can be made without departing from the scope and spirit of the invention. Also, descriptions of well-known functions and constructions are omitted for clarity and conciseness.

The present invention provides an apparatus and method for detecting channel quality in a mobile communication system. It is assumed that the channel quality is one of the average CINR of a reference signal such as a preamble signal or a pilot signal, the RSSSI of the reference signal, an intermediate variable for detecting the standard deviation of RSSI measurements of the reference signal, and a CINR expectation value-square value of the reference signal. The intermediate variable is used to detect the standard deviation of RSSI measurements of the preamble signal or the pilot signal, and the CINR expectation value-square value is used to detect the standard deviation of actual CINR measurements of the preamble signal or the pilot signal. For clarity, the CINR and RSSI of the preamble signal or the pilot signal are just called the CINR and RSSI, respectively. A CINR measurement or an RSSI measurement is a reference value used for detecting channel quality.

Particularly, the present invention provides an apparatus and method for accurately detecting an average CINR, an average RSSI, an intermediate variable, or a CINR expectation value-square value in a mobile communication system even when a MS fails to measure CINR or RSSI because the MS cannot receive a preamble signal or a pilot signal or there exists a period for which it is impossible to measure the CINR or RSSI of a serving BS in order to measure the channel quality of a BS using a different frequency from a current frequency used by the MS. For the sake of clarity, a period for which it is impossible to measure CINR is called a CINR measurement-impossible period and a period for which it is impossible to measure RSSI is called an RSSI measurement-impossible period.

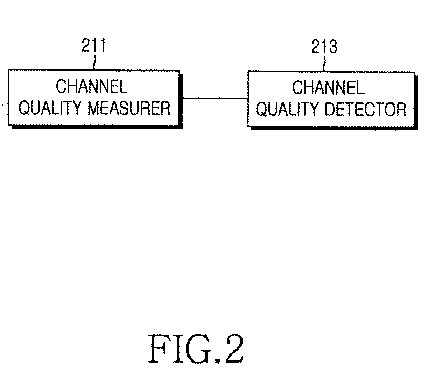

FIG. 2 is a block diagram of a channel quality detection apparatus according to an exemplary embodiment of the present invention.

In FIG. 2, the channel quality detection apparatus includes a channel quality measurer 211 and a channel quality detector 213. The channel quality can be an average CINR, an average RSSI, an intermediate variable, or a CINR expectation value-square value.

Assuming that the channel quality is the average CINR, a process of the channel quality detection apparatus will first be described.

The channel quality measurer 211 measures the actual CINR of a received pilot signal. It is assumed herein that a CINR measurement period is a frame period. During a CINR measurement-impossible period, the MS cannot measure the CINR in every frame. Thus, the channel quality measurer 211 cannot measure the CINR.

The channel quality detector 213 detects an average CINR using the CINR measurement received from the channel quality measurer 211 according to Equation (3) and Equation (4). Also, it is assumed that the channel quality detector 213 knows whether a $k^{th}$ frame falls in the CINR measurement-impossible period.

$$\mu_{CINR}[k] = CINR[0], \quad k = 0$$

$$\ldots \ldots (3)$$

$$\mu_{CINR}[k] = \mu_{CINR}[k-1] + \alpha_{avg}(CINR[k] - \mu_{CINR}[k-1])u[k], \quad k > 0$$

$$\ldots \ldots (4)$$

where $\mu_{CINR}[k]$ denotes the average CINR of a kth frame, *CINR[k]* denotes the actual CINR measurement of the kth frame, and $\alpha_{avg}$ is a weight being an averaging parameter defined by the BS. The CINR measurement is a CINR measured by the MS and an average CINR detection period is a frame period. k is a frame index, an initial frame index for a first average CINR detection is set to 0 (k=0), and k is increased by 1 for every following frame. The time of the first average CINR detection is the time of a first CINR measurement. *u[k]* is an update function expressed below as Equation (5) or Equation (6).

$$u[k] = \begin{cases} 1, & \text{when CINR is measured in } k^{th} \text{ frame} \\ 0, & \text{when CINR is not measured in } k^{th} \text{ frame} \end{cases}$$

$$\ldots \ldots (5)$$

$$u[k] = \begin{cases} f(D), & \text{when CINR is measured in } k^{th} \text{ frame} \\ 0, & \text{when CINR is not measured in } k^{th} \text{ frame} \end{cases}$$

$$\ldots \ldots (6)$$

In Equation (6), $f(D)$ is a function for applying a weight according to a CINR measurement-impossible period D. If the CINR measurement-impossible period D is long, a heavier weight is applied to a current CINR measurement. In this case, it is assumed that D is a non-zero positive integer. Here, $f(D) \leq 1$. Also, for instance, $f(D) = D/(D + 5)$.

As described earlier, despite the absence of an actual CINR measurement, an average CINR can be detected in accordance with the exemplary embodiment of the present invention. In the absence of an actual CINR measurement, $u[k]$ is 0 and thus the average CINR of the previous average CINR detection period, i.e. a (k-1)th frame is detected as that of the kth frame.

Assuming that the channel quality is the average RSSI, a process of the channel quality detection apparatus will now be described below.

The channel quality measurer 211 measures the actual RSSI of a received pilot signal. It is assumed herein that an RSSI measurement period is a frame period. During an RSSI measurement-impossible period, the MS cannot measure the RSSI in every frame. Thus, the channel quality measurer 211 cannot measure the RSSI.

The channel quality detector 213 detects an average RSSI using the RSSI measurement received from the channel quality measurer 211 according to Equation (7) and Equation (8). Also, it is assumed that the channel quality detector 213 knows whether a kth frame falls in the RSSI measurement-impossible period.

$$\mu_{RSSI}[k] = RSSI[0], \quad k = 0$$

$$\cdots \cdots (7)$$

$$\mu_{RSSI}[k] = \mu_{RSSI}[k-1] + \alpha_{avg}\left(RSSI[k] - \mu_{RSSI}[k-1]\right)u[k], \quad k > 0$$

$$\cdots \cdots (8)$$

where $\mu_{RSSI}[k]$ denotes the average RSSI of a $k^{th}$ frame, $RSSI[k]$ denotes the actual RSSI measurement of the $k^{th}$ frame. The RSSI measurement is an RSSI measured by the MS and an average RSSI detection period is a frame period. k is a frame index, an initial frame index for a first average RSSI detection is set to 0 (k=0), and k is increased by 1 for every following frame. The time of the first average RSSI detection is the time of a first RSSI measurement. $RSSI[k]$ is measured in units of mW. u[$k$] is an update function expressed similarly to Equation (5) or Equation (6). In other words, Equation (5) or Equation (6) considers whether the CINR is measured or not, while $u[k]$ here considers whether the RSSI is measured or not.

As described above, despite the absence of an actual RSSI measurement, an average RSSI can be detected in accordance with the exemplary embodiment of the present invention. Thus, in the absence of an actual RSSI measurement, $u[k]$ is 0 and thus the average RSSI of the previous average RSSI detection period, i.e. a (k-1)$^{th}$ frame is detected as that of the $k^{th}$ frame.

Assuming that the channel quality is the intermediate variable, a process of the channel quality detection apparatus will be described below.

The channel quality measurer 211 measures the actual RSSI of a received pilot signal and provides the RSSI measurement to the channel quality detector 213. The channel quality detector 213 detects an intermediate variable using the RSSI measurement according to Equation (9) and Equation (10).

$$x_{RSSI}^2 = |RSSI[0]|^2, \quad k = 0$$

$$\cdots \cdots (9)$$

$$x_{RSSI}^2[k] = x_{RSSI}^2[k-1] + \alpha_{avg}\left(x_{RSSI}^2[k] - x_{RSSI}^2[k-1]\right)u[k], \quad k > 0$$

$$\cdots \cdots (10)$$

where $x_{RSSI}^2[k]$ denotes the intermediate variable of a $k^{th}$ frame for use in computing the standard deviation [dB] of RSSI measurements and $u[k]$ is an update function expressed similarly to Equation (5) or Equation (6). Therefore, Equation (5) or Equation (6) considers whether the CINR is measured or not, while $u[k]$ here considers whether the RSSI is measured or not.

As described above, despite the absence of an actual RSSI measurement, an intermediate variable can be detected in accordance with the exemplary embodiment of the present invention. That is, in the absence of an actual RSSI measurement, $u[k]$ is 0 and thus the intermediate variable of the previous intermediate variable detection period, i.e. a (k-1)$^{th}$ frame is detected as that of the $k^{th}$ frame.

Assuming that the channel quality is the CINR expectation value-square value, a process of the channel quality detection apparatus will be described below.

The channel quality measurer 211 measures the actual CINR of a received pilot signal and provides the CINR measurement to the channel quality detector 213. The channel quality detector 213 detects a CINR expectation value-square value using the CINR measurement by Equation (11) and Equation (12):

$$x_{CINR}^2 = \left|CINR[0]\right|^2, \quad k = 0$$

$$\ldots \ldots (11)$$

$$x_{CINR}^2[k] = x_{CINR}^2[k-1] + \alpha_{avg}\left(x_{CINR}^2[k] - x_{CINR}^2[k-1]\right)u[k], \quad k > 0$$

$$\ldots \ldots (12)$$

where $x_{CINR}^2[k]$ denotes the CINR expectation value-square value of a $k^{th}$ frame for use in computing the standard deviation [dB] of CINR measurements and $u[k]$ is an update function expressed as Equation (5) or Equation (6).

As described above, despite the absence of an actual CINR measurement, a CINR expectation value-square value can be detected in accordance with the exemplary embodiment of the present invention. That is, in the absence of an actual CINR measurement, $u[k]$ is 0 and thus the CINR expectation value-square value of the previous CINR expectation value-square value detection period, i.e. a $(k-1)^{th}$ frame is detected as that of the $k^{th}$ frame.

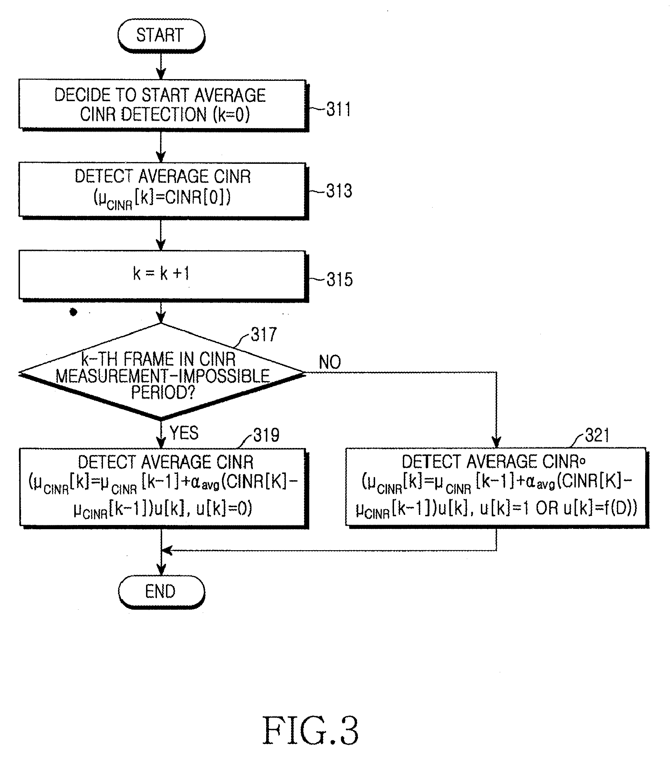

In FIG. 3, a process of the channel quality detector 213 is described below. While the following description is made of detecting an average CINR in the channel quality detector 213, it is an exemplary application and, thus, it should be understood that the channel quality detector 212 operates in a same manner when detecting an average RSSI, an intermediate variable, or a CINR expectation value-square value.

FIG. 3 is a flow diagram illustrating a process for detecting an average CINR in the channel quality detector 213, as illustrated in FIG. 2.

In FIG. 3, when determining to detect an average CINR, the channel quality detector 213 sets a frame index k to 0 (k=0) in step 311 and detects the average CINR by Equation (3) in step 313. In step 315, the channel quality detector 213 increases the frame index k by 1 (k=k+1).

In step 317, the channel quality detector 213 determines whether a $k^{th}$ frame falls in a CINR measurement-impossible period. If a $k^{th}$ frame falls in the CINR measurement-impossible period, the channel quality detector 213 detects an average CINR by Equation (4) in step 319 and then ends the process of the present invention. Since the $k^{th}$ frame falls in the CINR measurement-impossible period, $u[k]$ is set to 0 in Equation (4).

If the $k^{th}$ frame does not fall in the CINR measurement-impossible period, the channel quality detector 213 detects an average CINR by Equation (4) in step 321 and then ends the process of the present invention. Since the $k^{th}$ frame does not fall in the CINR measurement-impossible period, $u[k]$ is set to 1 or $f(D)$ ($u[k]=1$ or $u[k] = f(D)$) in Equation (4).

While not shown in FIG. 3, the channel quality detector 213 repeats steps 315, 317 and 319 or steps 315, 317 and 321 for next frames.

As described above, the present invention enables accurate channel quality detection in a mobile communication system, thereby improving system performance. Furthermore, the present invention enables accurate channel quality detective even in a period for which the channel quality cannot be measured actually, thereby increasing system performance.

While the invention has been shown and described with reference to certain exemplary embodiments of the present invention thereof, it will be understood by those skilled in the art that various changes in form and details may be made therein without departing from the spirit and scope of the present invention as defined by the appended claims and their equivalents.

## Claims

1. A method for detecting channel quality in a channel quality detecting apparatus of a mobile communication system, comprising:

> detecting a channel quality of a first channel quality detection period using a reference value of a reference signal;
> determining whether a reference value can be measured in a second channel quality detection period being one of a plurality of channel quality detection periods following the first channel quality detection period; and detecting a channel quality of the second channel quality detection period according to the determination.

**2.** The method of claim 1, wherein the first channel quality detection period is a time period for which the reference value is initially measured.

**3.** The method of claim 1, wherein the detection of a channel quality of the second channel quality detection period further comprises detecting a detected channel quality of a channel quality detection period previous to the second channel quality detection period as the channel quality of the second channel quality detection period, if a reference value cannot be measured in the second channel quality detection period.

**4.** The method of claim 1, wherein the detection of a channel quality of the second channel quality detection period further comprises detecting the channel quality of the second channel quality detection period using a detected channel quality of a channel quality detection period previous to the second channel quality detection period and a reference value measured in the second channel quality detection period, if the reference value can be measured in the second channel quality detection period.

**5.** The method of claim 1, wherein the detection of a channel quality of the second channel quality detection period further comprises detecting the channel quality of the second channel quality detection period using a detected channel quality of a channel quality detection period previous to the second channel quality detection period, a reference value measured in the second channel quality detection period, and an averaging parameter determined according to the length of a channel quality detection period in which the reference value cannot be measured, if the reference value can be measured in the second channel quality detection period.

**6.** The method of claim 1, wherein if the reference signal is a pilot signal, the reference value is a Carrier-to-Interference and Noise Ratio (CINR) of the pilot signal, the first channel quality detection period is a frame period with k=0 (k is a frame index), and the channel quality is an average CINR of the pilot signal, the detection of a channel quality of a first channel quality detection period further comprises detecting the channel quality of the first channel quality detection period according to

$$\mu_{CINR}[k] = CINR[0], \quad k = 0$$

where $\mu_{CINR}[k]$ denotes an average CINR of a $k^{th}$ frame, $CINR[k]$ denotes a CINR measurement of the $k^{th}$ frame, and the frame period with k=0 is a frame period in which the CINR is initially measured.

**7.** The method of claim 1, wherein if the reference signal is a pilot signal, the reference value is a CINR of the pilot signal, the second channel quality detection period is a frame period with k>0 (k is a frame index), and the channel quality is an average CINR of the pilot signal, the detection of a channel quality of the second channel quality detection period further comprises detecting the channel quality of the second channel quality detection period according to

$$\mu_{CINR}[k] = \mu_{CINR}[k-1] + \alpha_{avg}\left(CINR[k] - \mu_{CINR}[k-1]\right)u[k], \quad k > 0$$

where $\mu_{CINR}[k]$ denotes an average CINR of a $k^{th}$ frame, $CINR[k]$ denotes a CINR measurement of the $k^{th}$ frame, $\alpha_{avg}$ is an averaging parameter, a frame period with k=0 is a frame period in which the CINR is initially measured, *u[k] is* an update function expressed as

$$u[k] = \begin{cases} 1, & \text{when CINR is measured in } k^{th} \text{ frame} \\ 0, & \text{when CINR is not measured in } k^{th} \text{ frame} \end{cases}$$

8. A channel quality detecting apparatus in a mobile communication system, comprising:

a channel quality detector for detecting a channel quality of a first channel quality detection period using a reference value of a reference signal, determining whether the reference value can be measured in a second channel quality detection period being one of a plurality of channel quality detection periods following the first channel quality detection period, and detecting a channel quality of the second channel quality detection period according to the determination.

9. The channel quality detecting apparatus of claim 8, wherein the first channel quality detection period is a time period for which the reference value is initially measured.

10. The channel quality detecting apparatus of claim 8, wherein the channel quality detector detects a detected channel quality of a channel quality detection period previous to the second channel quality detection period as the channel quality of the second channel quality detection period, if a reference value cannot be measured in the second channel quality detection period.

11. The channel quality detecting apparatus of claim 8, wherein the channel quality detector detects the channel quality of the second channel quality detection period using a detected channel quality of a channel quality detection period previous to the second channel quality detection period and a reference value measured in the second channel quality detection period, if the reference value can be measured in the second channel quality detection period.

12. The channel quality detecting apparatus of claim 8, wherein the channel quality detector detects the channel quality of the second channel quality detection period using a detected channel quality of a channel quality detection period previous to the second channel quality detection period, a reference value measured in the second channel quality detection period, and an averaging parameter determined according to the length of a channel quality detection period in which the reference value cannot be measured, if the reference value can be measured in the second channel quality detection period.

13. The channel quality detecting apparatus of claim 8, wherein if the reference signal is a pilot signal, the reference value is a Carrier-to-Interference and Noise Ratio (CINR) of the pilot signal, the first channel quality detection period is a frame period with k=0 (k is a frame index), and the channel quality is an average CINR of the pilot signal, the channel quality detector detects the channel quality of the first channel quality detection period according to

$$\mu_{CINR}[k] = CINR[0], \quad k = 0$$

where $\mu_{CINR}[k]$ denotes an average CINR of a $k^{th}$ frame, *CINR[k]* denotes a CINR measurement of the $k^{th}$ frame, and the frame period with k=0 is a frame period in which the CINR is initially measured.

14. The channel quality detecting apparatus of claim 8, wherein if the reference signal is a pilot signal, the reference value is a CINR of the pilot signal, the second channel quality detection period is a frame period with k>0 (k is a frame index), and the channel quality is an average CINR of the pilot signal, the channel quality detector detects the channel quality of the second channel quality detection period according to

$$\mu_{CINR}[k] = \mu_{CINR}[k-1] + \alpha_{avg}\left(CINR[k] - \mu_{CINR}[k-1]\right)u[k], \quad k > 0$$

where $\mu_{CINR}[k]$ denotes an average CINR of a $k^{th}$ frame, *CINR[k]* denotes a CINR measurement of the $k^{th}$ frame, $\alpha_{avg}$ is an averaging parameter, a frame period with k=0 is a frame period in which the CINR is initially measured, *u*[*k*] is an update function expressed as

$$u[k] = \begin{cases} 1, & \text{when CINR is measured in } k^{th} \text{ frame} \\ 0, & \text{when CINR is not measured in } k^{th} \text{ frame} \end{cases}$$

FIG.1

211                                             213

```
┌──────────────────────┐         ┌──────────────────────┐
│      CHANNEL         │         │      CHANNEL         │
│  QUALITY MEASURER    │─────────│  QUALITY DETECTOR    │
└──────────────────────┘         └──────────────────────┘
```

# FIG.2

START

DECIDE TO START AVERAGE
CINR DETECTION (k=0) — 311

DETECT AVERAGE CINR
$(\mu_{CINR}[k]=CINR[0])$ — 313

$k = k + 1$ — 315

317

k-TH FRAME IN CINR
MEASUREMENT-IMPOSSIBLE
PERIOD?

NO

YES — 319

DETECT AVERAGE CINR
$(\mu_{CINR}[k]=\mu_{CINR}[k-1]+\alpha_{avg}(CINR[K]-\mu_{CINR}[k-1])u[k]$, $u[k]=0)$

321

DETECT AVERAGE CINR∘
$(\mu_{CINR}[k]=\mu_{CINR}[k-1]+\alpha_{avg}(CINR[K]-\mu_{CINR}[k-1])u[k]$, $u[k]=1$ OR $u[k]=f(D))$

END

# FIG.3

**European Patent Office**

**EUROPEAN SEARCH REPORT**

Application Number

EP 07 10 8918

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | "Digital cellular telecommunications system (Phase 2+)" ETSI STANDARDS, EUROPEAN TELECOMMUNICATIONS STANDARDS INSTITUTE, SOPHIA-ANTIPO, FR, vol. 3-G1, no. V6130, June 2005 (2005-06), XP014030809 ISSN: 0000-0001 * pages 31-35, paragraphs 8,8.1,8.2 * * pages 69-70, paragraph 10.2.3.2.1 * ----- | 1-14 | INV. H04B1/10 |
| X | US 2005/202859 A1 (JOHNSON KEVIN P [US] ET AL) 15 September 2005 (2005-09-15) | 1,8 | |
| A | * paragraphs [0060] - [0068] * ----- | 2-7,9-14 | |
| A | US 2004/136481 A1 (XU CHANG QING [SG] ET AL) 15 July 2004 (2004-07-15) * paragraphs [0008] - [0013], [0040] - [0043] * ----- | 1-14 | |
| | | | TECHNICAL FIELDS SEARCHED (IPC) |
| | | | H04B H04Q |

The present search report has been drawn up for all claims

| Place of search | Date of completion of the search | Examiner |
|---|---|---|
| Munich | 30 August 2007 | Isopescu, Ciprian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 07 10 8918

This annex lists the patent family members relating to the patent documents cited in the above-mentioned European search report.
The members are as contained in the European Patent Office EDP file on
The European Patent Office is in no way liable for these particulars which are merely given for the purpose of information.

30-08-2007

| Patent document cited in search report | | Publication date | Patent family member(s) | | Publication date |
|---|---|---|---|---|---|
| US 2005202859 | A1 | 15-09-2005 | NONE | | |
| US 2004136481 | A1 | 15-07-2004 | SG | 107112 A1 | 29-11-2004 |

For more details about this annex : see Official Journal of the European Patent Office, No. 12/82